# EUROPÄISCHE PATENTSCHRIFT

(11) **EP 3 294 527 B1**
(45) Veröffentlichungstag und Bekanntmachung des Hinweises auf die Patenterteilung: **09.09.2020**
(21) Anmeldenummer: 16733903.5
(22) Anmeldetag: 21.06.2016
(51) Int. Cl.: B29C 65/00, B29C 65/06

(54) **HANDGEFÜHRTE VORRICHTUNG ZUM SETZEN EINES SETZELEMENTS UND VERFAHREN ZUR VERWENDUNG DIESER VORRICHTUNG**
HAND-GUIDED DEVICE FOR SETTING A SETTING ELEMENT AND METHOD FOR USING SAID DEVICE
DISPOSITIF MANUEL POUR METTRE EN PLACE UN ÉLÉMENT À METTRE EN PLACE ET PROCÉDÉ D'UTILISATION DE CE DISPOSITIF

(30) Priorität: 23.06.2015 DE 102015110081
(43) Veröffentlichungstag der Anmeldung: 21.03.2018
(73) Patentinhaber: Weber Schraubautomaten GmbH, 82515 Wolfratshausen (DE)
(72) Erfinder: ZOLL, Reinhard, 81476 München (DE); WIETHOFF, Ralf, 82362 Weilheim (DE); HARTMANN, Jochen, 83661 Lenggries (DE)
(74) Vertreter: Manitz Finsterwald Patent- und Rechtsanwaltspartnerschaft mbB
(86) Internationale Anmeldenummer: PCT/EP2016/064289
(87) Internationale Veröffentlichungsnummer: WO 2016/207150

(56) Entgegenhaltungen:
- EP-A2- 1 577 076
- DE-U1- 29 614 419
- JP-A- S56 102 390
- JP-A- S63 214 425
- US-A- 4 657 626
- US-A- 5 833 127

## Beschreibung

Die Erfindung betrifft eine handgeführte Vorrichtung zum Setzen eines Setzelements in einem Bauteil unter Erzeugung einer Reibschweißverbindung zwischen dem Setzelement und dem Bauteil.

Aus dem Stand der Technik ist eine stationäre, vollautomatisierte Vorrichtung zum Setzen von Setzelementen bekannt. Diese ist meist an einem Roboterarm angebracht und per Computer vollautomatisch gesteuert. Eine solche Vorrichtung umfasst eine Rotationsvorschubeinheit, durch welche das Setzelement um eine Drehachse in Rotation versetzbar ist und auf das Setzelement gleichzeitig eine in Richtung der Drehachse wirkende Vorschubkraft ausübbar ist. Ist die Anschaffung einer solchen vollautomatischen Vorrichtung, beispielsweise in Werkstätten, zu teuer oder fällt eine solche stationäre Vorrichtung aus, beispielsweise wegen Wartungsarbeiten, so besteht der Bedarf, das Setzen von Setzelementen zumindest temporär per Hand zu übernehmen. Hierzu könnten prinzipiell handelsübliche Bohrmaschinen verwendet werden, wobei die nötige Rotation des Setzelements durch die Bohrmaschine und die Vorschubkraft durch Muskelkraft des jeweiligen Benutzers erzeugt wird.

Da die aufgebrachte Vorschubkraft in diesem Fall benutzerabhängig ist, ist es mittels handelsüblicher Bohrmaschinen jedoch nicht möglich, eine über eine Vielzahl von Setzvorgängen gleichbleibende Vorschubkraft, d.h. einen reproduzierbaren Vorschub des Setzelements, zu gewährleisten, was letztlich zu Prozessergebnissen unterschiedlicher Qualität führt.

Aus dem deutschen Gebrauchsmuster DE 296 14 419 U1 ist eine Vorrichtung mit den Merkmalen des Oberbegriffs des Anspruchs 1 bekannt.

Der Erfindung liegt die Aufgabe zugrunde, eine Vorrichtung zu schaffen, die einen manuell durchführbaren Setzvorgang reproduzierbarer Qualität ermöglicht.

Die Aufgabe wird durch eine Vorrichtung mit den Merkmalen des Anspruchs 1 gelöst.

Der Erfindung liegt der allgemeine Gedanke zugrunde, die auf das Setzelement ausgeübte Vorschubkraft von einer durch den Benutzer aufgebrachten Kraft zu entkoppeln, d.h. die Benutzerkraft nicht unmittelbar als Vorschubkraft zu nutzen, sondern sie stattdessen zur Aufladung eines Kraftspeichers zu verwenden, und letztlich mittels des Kraftspeichers die Vorschubkraft für das Setzelement aufzubringen. Dabei ist die Aufladung des Kraftspeichers limitiert, sodass - unter der Voraussetzung dass der Benutzer eine Minimalkraft zur vollständigen Aufladung des Kraftspeichers aufgebracht hat - eine konstant reproduzierbare Vorschubkraft von dem Kraftspeicher auf den Schlitten und das daran gekoppelte Setzelement abgegeben wird. Letztendlich kann somit im Wesentlichen unabhängig von der durch den Benutzer aufgebrachten Kraft ein reproduzierbarer Vorschubkraftverlauf generiert und somit eine dauerhaft gute und insbesondere reproduzierbare Qualität des Setzergebnisses sichergestellt werden.

Vorteilhafte Ausbildungen der Erfindung sind den Unteransprüchen, der Beschreibung und der Zeichnung zu entnehmen.

Vorzugsweise umfasst der Handgriff zwei längliche Griffelemente, die im Wesentlichen parallel zueinander und/oder mit gleichem Abstand zu einer Drehachse einer mit dem Setzelement bestückbaren Antriebswelle angeordnet sind. Dies hat den Vorteil, dass die benötigte Axialkraft mit beiden Armen aufgebracht werden kann, ohne dabei ein resultierendes Moment auf die Vorrichtung zu erzeugen. Der Kraftspeicher kann eine Feder, beispielsweise eine Druckfeder, umfassen oder als Feder ausgebildet sein. Jedoch ist auch jede andere Art von Kraft- bzw. Energiespeicher denkbar, beispielsweise ein hydraulischer Speicher, pneumatischer Speicher, elektrischer Speicher, z.B. eine Batterie, und/oder ein elektromechanischer Speicher.

Der Kraftbegrenzer ist in einer besonders kostengünstigen und einfach zu fertigenden Ausführungsform durch zwei korrespondierende Kraftbegrenzungsanschläge gebildet. Dabei ist der erste Kraftbegrenzungsanschlag an einem Abstützteil und der zweite Kraftbegrenzungsanschlag an dem Handgriff vorgesehen. Alternativ kann das Bauteil selbst den ersten Kraftbegrenzungsanschlag bilden.

Um die von dem Kraftspeicher auf den Schlitten abgegebene Kraft einstellen zu können, können bzw. kann der erste Kraftbegrenzungsanschlag und/oder der zweite Kraftbegrenzungsanschlag in axialer Richtung, d.h. in Richtung der Drehachse, verstellbar sein.

Gemäß einer vorteilhaften Ausführungsform umfasst die Vorrichtung einen Motor, insbesondere einen Elektromotor, zum Antreiben der Antriebswelle. Der Motor ist bevorzugt an dem Schlitten angeordnet. Um den Reibschweißprozess zuverlässig durchführen zu können, ist der Motor bevorzugt so ausgebildet, dass er die Antriebswelle mit einer Drehzahl größer 4000 U/min antreiben kann. Um den Motor zur Erzielung einer optimalen Erstarrung des aufgeschmolzenen Materials schneller anhalten zu können, kann der Motor mit einer aktiven Bremsfunktion ausgestattet sein.

Grundsätzlich kann der Motor manuell gestartet werden. Zur Erhöhung der Zuverlässigkeit und Reproduzierbarkeit des Setzvorgangs ist bevorzugt jedoch ein erstes Detektionsmittel zur Detektion einer Aktivierung des Kraftbegrenzers vorgesehen, insbesondere ein Detektionsmittel zur Detektion eines Kontakts zwischen einem an einem Abstützteil vorgesehenen ersten Kraftbegrenzungsanschlag und einem an dem Handgriff vorgesehenen zweiten Kraftbegrenzungsanschlag. Das erste Detektionsmittel erkennt mit anderen Worten, wenn der Kraftspeicher maximal aufgeladen ist, um dann einen automatischen Start des eigentlichen Setzvorgangs auszulösen. Hierzu kann das erste Detektionsmittel einen ersten Schalter umfassen, der mit einem antriebswirksam mit der Antriebswelle gekoppelten Motor, insbesondere Elektromotor, verbunden ist, um den Motor bei Detektion der Aktivierung des Kraftbegrenzers einzuschalten.

Ferner ist es vorteilhaft, wenn das Abstützteil einen ersten Endanschlag und der Schlitten einen zweiten Endanschlag umfasst, um eine Vorschubbewegung des Schlittens relativ zu dem Abstützteil zu limitieren. Grundsätzlich könnte auch das Bauteil selbst den ersten Endanschlag bilden.

Zur Detektion einer Endposition des Schlittens oder des Setzelements ist bevorzugt ein zweites Detektionsmittel vorgesehen. Das zweite Detektionsmittel kann beispielsweise einen Kontakt zwischen einem ersten Endanschlag und einem zweiten Endanschlag detektieren. Der erste Endanschlag und der zweite Endanschlag sind vorzugsweise so angeordnet, dass sie aufeinandertreffen, wenn die gewünschte Eintauchtiefe des Setzelements erreicht ist.

Das zweite Detektionsmittel umfasst bevorzugt einen zweiten Schalter, der mit einem antriebswirksam mit der Antriebswelle gekoppelten Motor, insbesondere Elektromotor, verbunden ist, um den Motor bei Detektion der Endposition abzuschalten. Der Benutzer braucht den Motor beim Erreichen der Endposition also nicht selbst abzuschalten.

Um dem Benutzer ein Signal zu geben, welches das Ende eines Setzvorgangs anzeigt, kann die Vorrichtung eine Signaleinrichtung zur Aussendung eines Signals aufweisen. Das Signal wird vorzugsweise wenige Sekunden nach Abschalten und Stillstand des Motors, idealerweise ab dem Zeitpunkt, an dem das durch den Reibschweißprozess erhitze Material des Bauteils hinreichend abgekühlt ist, angezeigt.

Das Signal kann ein unimodales, d.h. einen einzigen menschlichen Sinn ansprechendes, oder ein multimodales, d.h. mehrere menschliche Sinne ansprechendes, Signal sein. Insbesondere kann das Signal ein optisches Signal, beispielsweise von einer Leuchte, ein akustisches Signal, beispielsweise ein Ton, und/oder ein zu erfühlendes Signal, beispielsweise eine Vibration, umfassen.

Um nach Beendigung eines Setzvorgangs den Schlitten in eine Ausgangsposition zurück zu bewegen, kann zwischen einem Abstützteil und dem Schlitten eine Rückstellfeder angeordnet sein. Der Schlitten ist hierdurch gewissermaßen schwimmend zwischen der Rückstellfeder und dem Kraftspeicher gelagert. Die Federsteifigkeit der Rückstellfeder ist vorzugsweise geringer als die Federsteifigkeit des Kraftspeichers.

Die Vorrichtung kann ferner zumindest eine Linearführung umfassen an der der Schlitten und der Handgriff linear beweglich geführt sind. Vorteilhafterweise umfasst die Vorrichtung zwei parallel zueinander verlaufende Führungsstangen, an denen jeweils der Schlitten und der Handgriff linear beweglich geführt sind.

Zur Erleichterung des Setzvorgangs ist bevorzugt eine, insbesondere an dem Schlitten, angeordnete Leuchte, z.B. LED, zur Ausleuchtung eines die Aufnahme für das Setzelement umgebenden Arbeitsbereichs vorgesehen.

Besonders gut eignet sich die Vorrichtung zum Setzen eines ein erstes Kunststoffmaterial aufweisenden Setzelements in einem ein zweites Kunststoffmaterial aufweisenden Bauteil. Dabei ist der Schmelzpunkt des ersten Kunststoffmaterials bevorzugt höher als der Schmelzpunkt des zweiten Kunststoffmaterials.

Die Erfindung betrifft ferner ein Verfahren zum manuellen bzw. handgeführten Setzen eines Setzelements in einem Bauteil mittels der zuvor beschriebenen Vorrichtung, mit den Schritten:
- Anbringen des Setzelements an der Antriebswelle;
- Aufladen des Kraftspeichers durch eine Bewegung des Handgriffs relativ zu dem Schlitten bis zur Aktivierung des Kraftbegrenzers,
- Einbringen des Setzelements in das Bauteil unter Rotation der Antriebswelle und Vorschub des Schlittens durch den Kraftspeicher.

Dabei kommt beim Einbringen des Setzelements die Vorschubkraft nur vom Kraftspeicher, d.h. sie wird nicht direkt von dem Handgriff auf den Schlitten übertragen. Durch das erfindungsgemäße Verfahren lassen sich die voranstehend beschriebenen Vorteile entsprechend erzielen.

Das Verfahren wird bevorzugt derart ausgeführt, dass das Begrenzen der Aufladung des Kraftspeichers durch zumindest einen Kraftbegrenzungsanschlag bewirkt wird, der insbesondere zwischen dem Handgriff und einem Abstützteil wirkt und zwei im die Aufladung begrenzenden Zustand aneinanderstoßende Wirkflächen aufweist.

Sobald der Kraftspeicher aufgeladen ist und der Kraftbegrenzer aktiviert wird, kann ein erster Schalter betätigt werden, der ein Einschalten eines Motors, insbesondere Elektromotors, zum Antreiben der Antriebswelle bewirkt und somit den eigentlichen Setzvorgang startet. Grundsätzlich ist es möglich, den ersten Schalter manuell zu betätigen. Zur Erhöhung der Zuverlässigkeit und Reproduzierbarkeit des Setzvorgangs wird jedoch eine automatische Betätigung des ersten Schalters bevorzugt. Diese kann beispielsweise durch ein erstes Detektionsmittel ausgelöst werden, welches einen Kontakt zwischen einem an einem Abstützteil vorgesehenen ersten Kraftbegrenzungsanschlag und einem an dem Handgriff vorgesehenen zweiten Kraftbegrenzungsanschlag detektiert.

Wenn der Schlitten eine Endposition erreicht hat, wird bevorzugt durch automatische Betätigung eines zweiten Schalters das Ausschalten eines Motors zum Antreiben der Antriebswelle initiiert. Die Endposition des Schlittens korrespondiert dabei vorteilhafterweise mit der Endposition des Setzelements in dem Bauteil.

Anschließend und nach einer Abkühlphase von Bauteil und Setzelement von kleiner 10 Sekunden, insbesondere 1 bis 3 Sekunden, gemessen ab dem Zeitpunkt an dem das Setzelement und der Motor nicht mehr rotieren, kann eine Signaleinrichtung ein unimodales oder multimodales Signal aussenden, um zu signalisieren, dass der Setzvorgang beendet ist.

Um das Auslaufen des Motors und damit die Gesamtzeit des Setzvorgangs zu verkürzen, kann der Motor, nachdem er ausgeschaltet wurde, aktiv gebremst werden.

Auch das Verfahren eignet sich besonders gut zum Setzen eines ein erstes Kunststoffmaterial aufweisenden Setzelements in einem ein zweites Kunststoffmaterial aufweisenden Bauteil, wobei der Schmelzpunkt des ersten Kunststoffmaterials bevorzugt höher als der Schmelzpunkt des zweiten Kunststoffmaterials sein sollte.

Nachfolgend wird die Erfindung anhand von rein beispielhaften Ausführungsformen unter Bezugnahme auf die beigefügten Zeichnungen beschrieben. Es zeigen:
- Fig. 1: eine erste perspektivische Darstellung einer erfindungsgemäßen Vorrichtung gemäß einer ersten Ausführungsform;
- Fig. 2: eine zweite perspektivische Darstellung der Vorrichtung von Fig. 1;
- Fig. 3: eine dritte perspektivische Darstellung der Vorrichtung von Fig. 1;
- Fig. 4: eine Draufsicht der Vorrichtung von Fig. 1;
- Fig. 5: eine erste perspektivische Darstellung einer erfindungsgemäßen Vorrichtung gemäß einer zweiten Ausführungsform; und
- Fig. 6: eine zweite perspektivische Darstellung der Vorrichtung von Fig. 5.

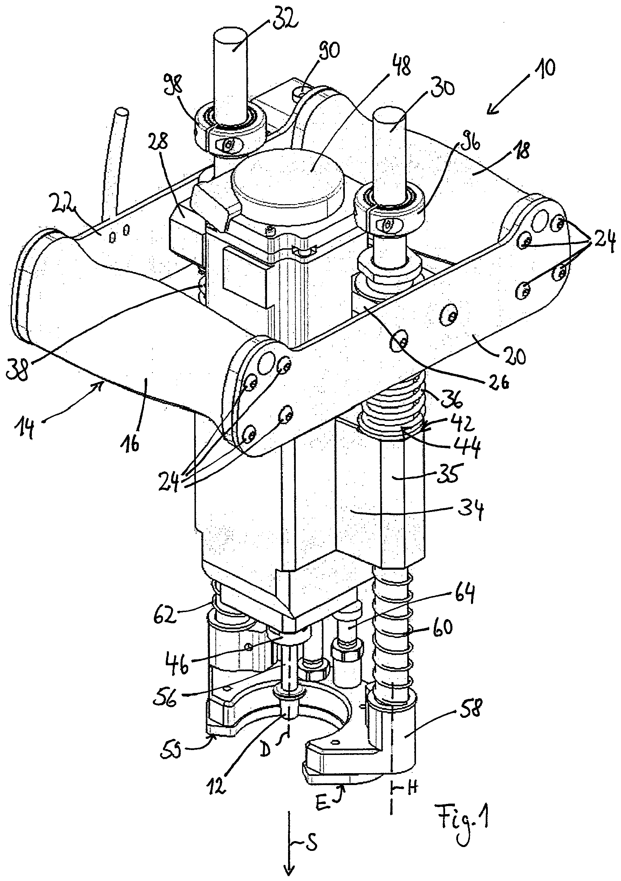

Fig. 1 bis 4 und 5 bis 6 zeigen jeweils eine Vorrichtung 10 zum handgeführten Setzen eines Setzelements 12 in einem nicht gezeigten Bauteil.

Die in Fig. 1 bis 4 gezeigte Vorrichtung 10 (erste Ausführungsform) umfasst einen Handgriff 14 mit zwei länglichen Griffelementen 16, 18, die an ihren Enden mittels Verbindungsstücken 20, 22 miteinander verbunden sind. Die Verbindungsstücke 20, 22 sind in Form von Blechen ausgebildet und mittels Schrauben 24 lösbar mit den Griffelementen 16, 18 verbunden. Die Griffelemente 16, 18 erstrecken sich jeweils im Wesentlichen rechtwinklig zu den Blechen 20, 22, sodass die Griffelemente 16, 18 und die Bleche 20, 22 ein Rechteck bilden. An den Blechen 20, 22 sind erste Lager 26, 28 angeordnet, in welchen zwei parallel zueinander angeordnete Führungsstangen 30, 32 verschiebbar gelagert sind.

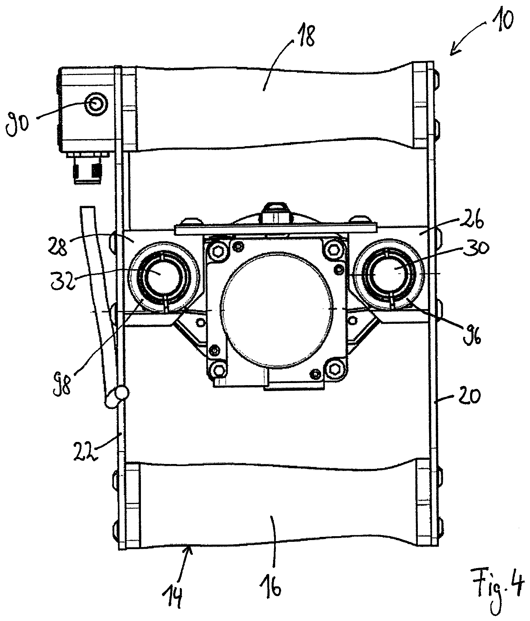

Der Handgriff 14 kann von einem nicht gezeigten Benutzer an den Griffelementen 16, 18 mit beiden Händen umgriffen werden, um die Vorrichtung 10 anzuheben und gegen das Bauteil zu drücken. Wie insbesondere in Fig. 4 zu sehen ist, sind die Griffelemente 16, 18 bezüglich ihres Durchmessers ergonomisch an die Hand angepasst und dementsprechend in einem Bereich verjüngt, an dem der Benutzer seinen Zeigefinger und Daumen anlegen soll.

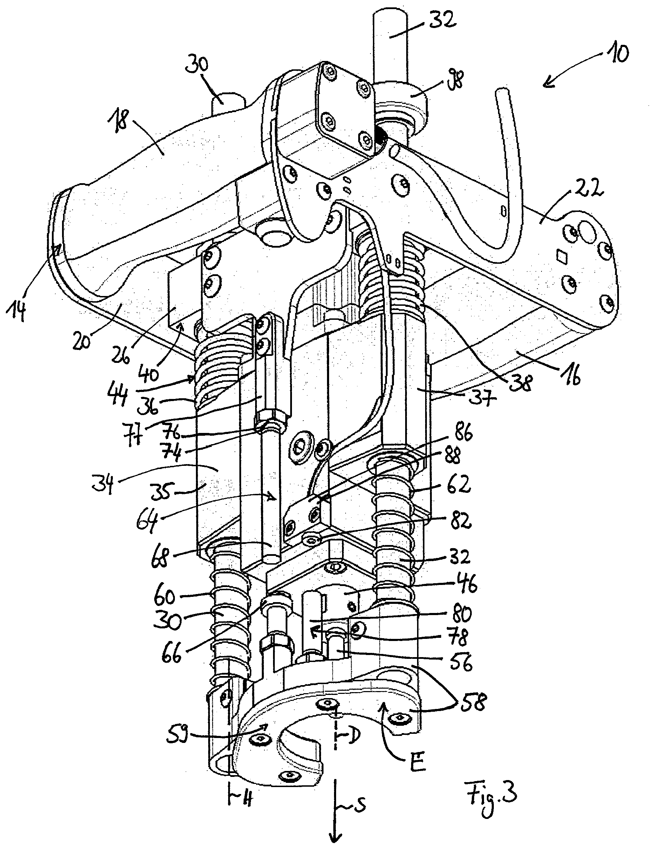

Ferner umfasst die Vorrichtung 10 einen Schlitten 34, der mittels zweiter Lager 35, 37 ebenfalls an den Führungsstangen 30, 32 verschiebbar gelagert ist. Zwischen den ersten Lagern 26, 28 und den zweiten Lagern 35, 37 ist um jede Führungsstange 30, 32 herum jeweils eine Druckfeder 36, 38 angeordnet. Jede Druckfeder 36, 38 ist zwischen eine erste Kraftübertragungsfläche 40, siehe Fig. 3, an dem ersten Lager 26 und eine zweite Kraftübertragungsfläche 42, siehe Fig. 1, an dem Schlitten 34 geschaltet. Die erste Kraftübertragungsfläche 40 und die zweite Kraftübertragungsfläche 42 erstrecken sich im Wesentlichen rechtwinklig zu einer Hauptachse H der Führungsstangen 30, 32 und sind parallel zueinander und sich gegenüberliegend angeordnet. Die Druckfedern 36, 38 dienen als Kraftspeicher 44 und sind dazu ausgebildet, eine von dem Benutzer auf den Handgriff 14 aufgebrachte Kraft auf den Schlitten 34 zu übertragen.

An dem Schlitten 34 ist eine Antriebswelle 46 rotierbar angeordnet, die mit einem Elektromotor 48 zum Antreiben der Antriebswelle 46 antriebswirksam verbunden ist. Der Elektromotor 48 ist derart ausgebildet, dass die Antriebswelle 46 auf eine Drehzahl von mindestens 4000 U/min gebracht werden kann und von dort aktiv auf 0 U/min abgebremst werden kann. An dem dem Elektromotor 48 abgewandten Ende der Antriebswelle 46 ist ein Bit 56 zur Aufnahme des Setzelements 12 vorgesehen.

Ferner umfasst die Vorrichtung 10 ein Abstützteil 58 mit einer ringabschnittsförmigen Anlagefläche 59, mit welcher die Vorrichtung 10 an das nicht gezeigte Bauteil angelegt werden kann. Wie in Fig. 3 zu sehen ist, erstreckt sich die Anlagefläche 59 ringabschnittsförmig über einen Winkel von mehr als 180° um einen Schnittpunkt zwischen einer durch die Anlagefläche 59 definierten Anlageebene E und einer Drehachse D der Antriebswelle 46. Das Abstützteil 58 ist mit beiden Führungsstangen 30, 32 verbunden und bildet somit eine Verbindung zwischen den beiden Führungsstangen 30, 32. Rückstellfedern 60, 62, die zwischen das Abstützteil 58 und den Schlitten 34 geschaltet sind, dienen dazu, den Schlitten 34 in einer von dem Abstützteil 58 entfernten Ausgangslage zu halten. Die Federsteifigkeit der Rückstellfedern 60, 62 ist geringer als die der Druckfedern 36, 38 gewählt, sodass bei einer Bewegung des Handgriffs 14 in Richtung des Abstützteils 58 zuerst die Rückstellfedern 60, 62 und erst dann die Druckfedern 36, 38 komprimiert werden.

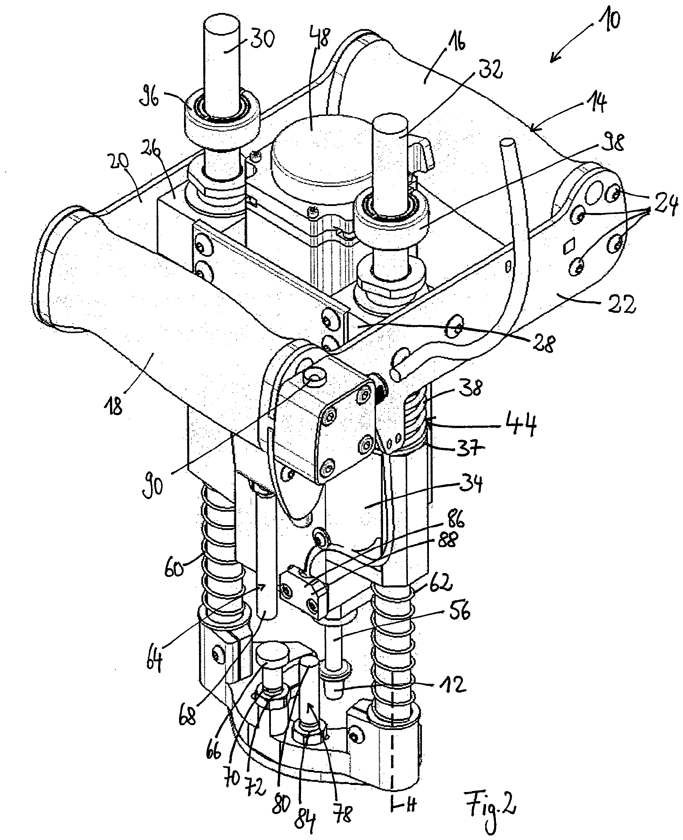

Zwischen dem Handgriff 14 und dem Abstützteil 58 ist ein Kraftbegrenzer 64, angeordnet, der in Form eines ersten Kraftbegrenzungsanschlags 66 und eines zweiten Kraftbegrenzungsanschlags 68 ausgebildet ist. Die Kraftbegrenzungsanschläge 66, 68 sind derart zueinander angeordnet, dass sie bei einer durch die Führungsstangen 30, 32 geführten Bewegung des Handgriffs 14 in Richtung des Abstützteils 58 mit ihren Stirnseiten aneinander stoßen. Der erste Kraftbegrenzungsanschlag 66 weist, wie in Fig. 2 zu sehen ist, ein Außengewinde 70 in Form eines Feingewindes auf, welches mit einem Innengewinde 72 des Abstützteils 58 korrespondiert. Zusätzlich ist, wie in Fig. 3 zu sehen ist, der zweite Kraftbegrenzungsanschlag 68 mit einem Außengewinde 74 in Form eines Feingewindes ausgestattet, welches mit einem Innengewinde 76 eines dem Handgriff 14 zugeordneten Teils korrespondiert. Hierdurch ist es auf einfache Weise möglich, den ersten Kraftbegrenzungsanschlag 66 und den zweiten Kraftbegrenzungsanschlag 68 relativ zueinander in axialer Richtung zu verstellen.

Zwischen dem Abstützteil 58 und dem Schlitten 34 ist eine Vorschubbegrenzungseinrichtung 78, siehe Fig. 3, mit einem ersten Endanschlag 80 und einem zweiten Endanschlag 82 vorgesehen. Wie in Fig. 2 zu sehen ist, ist der erste Endanschlag 80 mittels eines Feingewindes 84 an dem Abstützteil 58 axial verstellbar angebracht.

Der Schlitten 34 weist ein Detektionsmittel 86 auf, welches dazu ausgebildet ist, einen Kontakt zwischen dem ersten Endanschlag 80 und dem zweiten Endanschlag 82 zu detektieren und einem Schalter 88 ein Signal zum Ausschalten des Elektromotors 48 zu übermitteln. An dem Handgriff 14 ist eine Signaleinrichtung 90 in Form einer Leuchte zum Signalisieren des Endes eines Setzvorgangs angeordnet (Fig. 2).

Um ein Abziehen des Handgriffs 14 von den Führungsstangen 30, 32 entgegen der Setzrichtung S zu verhindern, ist um jede der Führungsstangen 30, 32 in einem von der Anlagefläche 59 entfernten Bereich ein ringförmiger Stopper 96, 98 angeordnet.

Nachfolgend wird die Durchführung eines Vorgangs zum Setzen des Setzelements 12 in dem Bauteil mittels der zuvor beschriebenen Vorrichtung 10 erläutert.

Zuerst wird die Vorrichtung 10 mit dem Setzelement 12 bestückt. Dabei wird das Setzelement 12 an dem der Antriebswelle 46 zugeordneten Bit 56 angebracht, indem es bei ruhender Antriebswelle 46 stirnseitig auf den Bit 56 aufgesteckt wird.

Anschließend wird die Vorrichtung 10 an einer gewünschten Stelle mit der Anlagefläche 59 flächig gegen das Bauteil gedrückt, sodass die Anlagefläche 59 plan an dem Bauteil anliegt. Durch eine Bewegung des Handgriffs 14 in Setzrichtung S entlang der Führungsstangen 30, 32 werden zunächst die Rückstellfedern 60, 62 komprimiert bis das Setzelement 12 an dem Bauteil anstößt. Anschließend wird durch die weitere Bewegung des Handgriffs 14 in Richtung Bauteil eine Relativbewegung zwischen dem Handgriff 14 und dem Schlitten 34 erzeugt, wodurch die Druckfedern 36, 38 komprimiert werden und somit der Kraftspeicher 44 aufgeladen wird. Die Aufladung des Kraftspeichers 44 wird dadurch begrenzt, dass der erste Kraftbegrenzungsanschlag 66 und der zweite Kraftbegrenzungsanschlag 68 aufeinandertreffen und eine weitere Relativbewegung zwischen Handgriff 14 und Schlitten 34 in Richtung des Abstützteils 58 verhindert wird. An diesem Punkt des Setzvorgangs drückt der Benutzer indirekt, nämlich über den Handgriff 14 und den Kraftspeicher 44, mit einer durch den Kraftbegrenzer 64 limitierten Maximalkraft auf den Schlitten 34. Der Schlitten 34 drückt seinerseits mit der darin gespeicherten Maximalkraft das Setzelement 12 gegen das Bauteil. Wird nun der Elektromotor 48 gestartet, dringt das Setzelement 12 nach Erreichen der für das Aufschmelzen des Materials des Bauteils erforderlichen Drehzahl in das Bauteil ein, wobei es durch den durch den Kraftspeicher 44 beaufschlagten Schlitten 34 vorgeschoben wird, während der Benutzer den Handgriff 14 weiterhin mit gerade so viel Kraft beaufschlagt, dass die Kraftbegrenzungsanschläge 66, 68 aneinander anliegen.

Das Vorschieben des Setzelements 12 erfolgt bis zu dem Zeitpunkt, an dem der erste Endanschlag 80 und der zweite Endanschlag 82 aufeinandertreffen. Bei korrekter Einstellung der Endanschläge 80, 82 ist an dieser Stelle die Endposition des Setzelements 12 im Bauteil erreicht. Dies wird durch das Detektionsmittel 86 detektiert, woraufhin mittels des Schalters 88 der Elektromotor 48 ausgeschaltet wird. Um den Setzvorgang zu verkürzen und den Erstarrungsprozess zu optimieren, wird der Elektromotor 48 nach dem Ausschalten aktiv von etwa 4000 U/min auf 0 U/min abgebremst. Während einer Abkühlphase von ca. 1 bis 3 Sekunden, gemessen ab dem Zeitpunkt an dem der Elektromotor 0 U/min erreicht hat, kann das durch den Reibschweißprozess erhitzte Material abkühlen und erstarren, bevor durch die Signaleinrichtung 90 mitgeteilt wird, dass der Setzvorgang beendet ist und die Vorrichtung 10 nun von dem mit dem Bauteil verbundenen Setzelement 12 entfernt werden kann.

Der Zeitpunkt des Anschaltens des Elektromotors 48 kann durch den Benutzer vorgegeben werden. Wird eine möglichst schnelle Prozesszeit angestrebt, so kann der Elektromotor 48 direkt nach dem Anbringen des Setzelements 12 an der Antriebswelle 46 angeschaltet werden. Ist jedoch ein möglichst reproduzierbarer Prozess gewünscht, so bietet es sich an, mit dem Anschalten des Elektromotors 48 zu warten, bis das Setzelement 12 mit der in dem aufgeladenen Kraftspeicher 44 gespeicherten Maximalkraft gegen das Bauteil gedrückt wird.

Wenn der Setzvorgang beendet ist und die Vorrichtung 10 von dem Bauteil entfernt wird, wird der Schlitten 34 durch die Rückstellfedern 60, 62 zurück in seine Ausgangsposition gedrückt. Ebenso drücken die Druckfedern 36, 38 des Kraftspeichers 44 den Handgriff 14 zurück in seine Ausgangsposition.

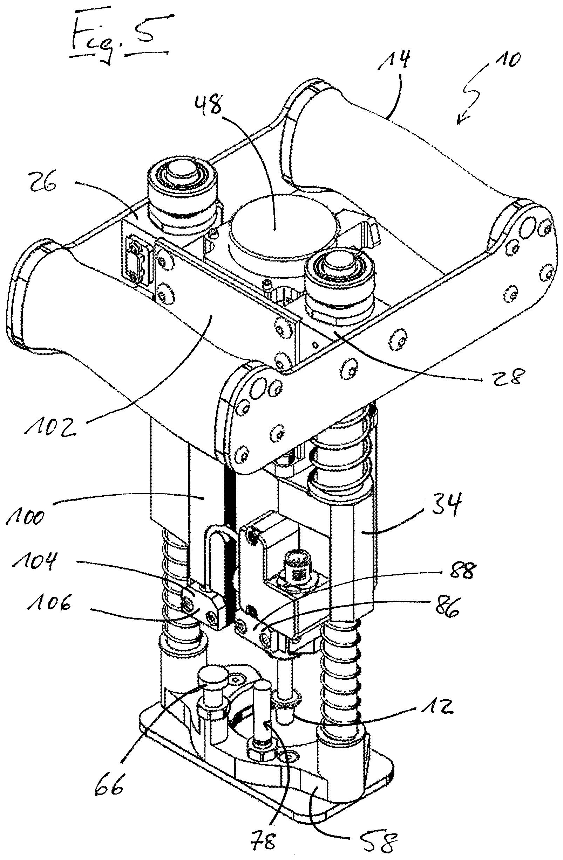

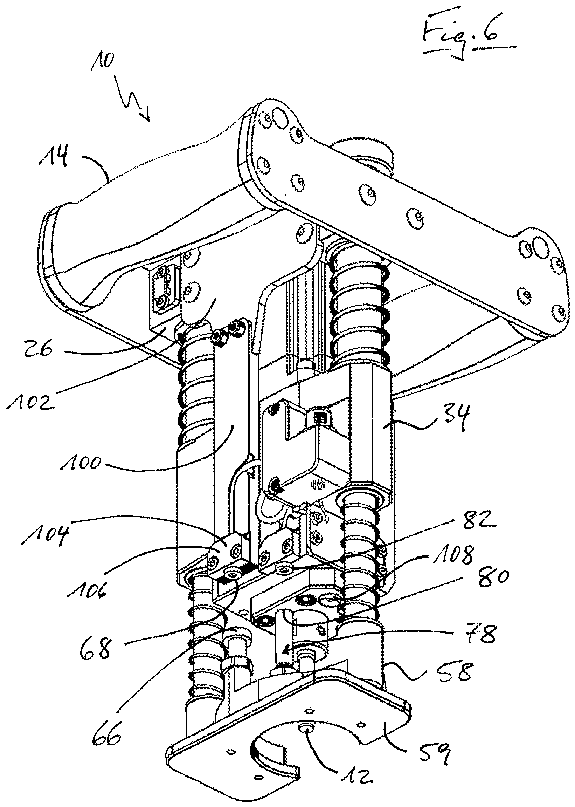

Die in Fig. 5 und 6 gezeigte Vorrichtung 10 (zweite Ausführungsform) entspricht weitgehend der in Fig. 1 bis 4 gezeigten ersten Ausführungsform mit dem Unterschied, dass der zweite Kraftbegrenzungsanschlag 68 des Kraftbegrenzers 64 hier an dem dem Abstützteil 58 zugewandten Ende eines starren Blechstreifens 100 ausgebildet ist, dessen anderes Ende mit dem Handgriff 14 fest verbunden ist, konkret über ein Zwischenblech 102, welches an den ersten Lagern 26, 28 des Schlittens 34 angebracht ist. Der zweite Kraftbegrenzungsanschlag 68 ist mit einem Detektionsmittel 104 versehen, welches dazu ausgebildet ist, einen Kontakt zwischen dem ersten und zweiten Kraftbegrenzungsanschlag 66, 68, d.h. also letztlich eine Aktivierung des Kraftbegrenzers 64 nach vollständiger Aufladung des Kraftspeichers 44, zu detektieren und einem Schalter 106 ein Signal zum automatischen Einschalten des Elektromotors 48 zu übermitteln.

Im weiteren Unterschied zur ersten Ausführungsform ist die Signaleinrichtung 90 zum Signalisieren des Endes eines Setzvorgangs bei der zweiten Ausführungsform nicht am Handgriff 14, sondern an einer dem Abstützteil 58 zugewandten Seite des Schlittens 34 angeordnet, beispielsweise in Form einer LED, welche einen z.B. grünen Lichtkegel in einen die Aufnahme für das Setzelement umgebenden Arbeitsbereich ausstrahlt.

Zusätzlich ist eine Leuchte 108, z.B. in Form einer LED, zur Ausleuchtung eines die Aufnahme für das Setzelement umgebenden Arbeitsbereichs während des Setzvorgangs an der dem Abstützteil 58 zugewandten Seite des Schlittens 34 angeordnet.

### Bezugszeichenliste

- 10: Vorrichtung
- 12: Setzelement
- 14: Handgriff
- 16, 18: Griffelement
- 20, 22: Verbindungsstück
- 24: Schrauben
- 26,28: Lager
- 30, 32: Führungsstange
- 34: Schlitten
- 35, 37: Lager
- 36, 38: Druckfedern
- 40, 42: Kraftübertragungsfläche
- 44: Kraftspeicher
- 46: Antriebswelle
- 48: Elektromotor
- 56: Bit
- 58: Abstützteil
- 59: Anlagefläche
- 60, 62: Rückstellfeder
- 64: Kraftbegrenzer
- 66, 68: Kraftbegrenzungsanschlag
- 70,74: Außengewinde
- 72, 76: Innengewinde
- 77: Teil
- 78: Vorschubbegrenzungseinrichtung
- 80, 82: Endanschlag
- 84: Feingewinde
- 86: Detektionsmittel
- 88: Schalter
- 90: Signaleinrichtung
- 96, 98: Stopper
- 100: Blechstreifen
- 102: Zwischenblech
- 104: Detektionsmittel
- 106: Schalter
- 108: Leuchte
- H: Hauptachse
- E: Anlageebene
- D: Drehachse
- S: Setzrichtung

## Patentansprüche

1. Handgeführte Vorrichtung (10) zum Setzen eines Setzelements (12) in einem Bauteil, mit
einem Handgriff (14) zum Halten der Vorrichtung (10);
einem relativ zu dem Handgriff (14) bewegbaren Schlitten (34), der eine rotierbar gelagerte Antriebswelle (46) trägt, an deren einen Ende eine Aufnahme für das Setzelement (12) ausgebildet ist;
einem Abstützteil (58);
einem Kraftspeicher (44), der zwischen den Handgriff (14) und den Schlitten (34) geschaltet ist und der zur Speicherung einer definierten Vorschubkraft dient, mit welcher der Kraftspeicher (44) durch eine Relativbewegung zwischen dem Handgriff (14) und dem Schlitten (34) aufladbar ist; und
einem Kraftbegrenzer (64) zur Begrenzung der in dem Kraftspeicher (44) gespeicherten Vorschubkraft;
wobei der Kraftspeicher (44) dazu ausgebildet ist, die gespeicherte Vorschubkraft über den Schlitten (34) auf das Setzelement (12) auszuüben
**dadurch gekennzeichnet, dass**
der Kraftbegrenzer (64) durch zwei korrespondierende Kraftbegrenzungsanschläge (66, 68) gebildet ist, wobei der erste Kraftbegrenzungsanschlag (66) an dem Abstützteil (58) und der zweite Kraftbegrenzungsanschlag (68) an dem Handgriff (14) vorgesehen ist.

2. Vorrichtung (10) nach Anspruch 1,
**dadurch gekennzeichnet, dass** der erste Kraftbegrenzungsanschlag (66) und/oder der zweite Kraftbegrenzungsanschlag (68) in axialer Richtung verstellbar sind bzw. ist.

3. Vorrichtung (10) nach zumindest einem der vorstehenden Ansprüche,
**gekennzeichnet durch**
einen Motor, insbesondere Elektromotor (48), zum Antreiben der Antriebswelle (46).

4. Vorrichtung (10) nach zumindest einem der vorstehenden Ansprüche,
**dadurch gekennzeichnet, dass**
das Abstützteil (58) einen ersten Endanschlag (80) umfasst und der Schlitten (34) einen zweiten Endanschlag (82) umfasst, um eine Vorschubbewegung des Schlittens (34) relativ zu dem Abstützteil (58) zu limitieren.

5. Vorrichtung (10) nach zumindest einem der vorstehenden Ansprüche,
**gekennzeichnet durch**
ein Detektionsmittel (86) zur Detektion einer Endposition des Schlittens (34), insbesondere zur Detektion eines Kontakts zwischen einem ersten Endanschlag (80) und einem zweiten Endanschlag (82).

6. Vorrichtung (10) nach Anspruch 5,
**dadurch gekennzeichnet, dass**
das Detektionsmittel (86) einen Schalter (88) umfasst, der mit einem antriebswirksam mit der Antriebswelle (46) gekoppelten Motor, insbesondere Elektromotor (48), verbunden ist, um den Motor (48) bei Detektion der Endposition abzuschalten.

7. Vorrichtung (10) nach zumindest einem der vorstehenden Ansprüche,
**gekennzeichnet durch**
eine Signaleinrichtung (90) zur Aussendung eines Signals an einen Benutzer, welches das Ende eines Setzvorgangs anzeigt.

8. Vorrichtung (10) nach zumindest einem der vorstehenden Ansprüche,
**dadurch gekennzeichnet, dass**
zwischen dem Abstützteil (58) und dem Schlitten (34) eine Rückstellfeder (60, 62) angeordnet ist, um nach Beendigung eines Setzvorgangs den Schlitten (34) in eine Ausgangsposition zurück zu bewegen.

9. Vorrichtung (10) nach zumindest einem der vorstehenden Ansprüche,
**gekennzeichnet durch**
zumindest eine Linearführung, insbesondere zwei Führungsstangen (30, 32), an der bzw. denen der Schlitten (34) und der Handgriff (14) linear beweglich geführt sind.

10. Vorrichtung (10) nach zumindest einem der vorstehenden Ansprüche,
**gekennzeichnet durch**
ein Detektionsmittel (104) zur Detektion einer Aktivierung des Kraftbegrenzers (64), insbesondere zur Detektion eines Kontakts zwischen dem an dem Abstützteil (58) vorgesehenen ersten Kraftbegrenzungsanschlag (66) und dem an dem Handgriff (14) vorgesehenen zweiten Kraftbegrenzungsanschlag (68).

11. Vorrichtung (10) nach Anspruch 10,
**dadurch gekennzeichnet, dass**
das Detektionsmittel (104) einen Schalter (106) umfasst, der mit einem antriebswirksam mit der Antriebswelle (46) gekoppelten Motor, insbesondere Elektromotor (48), verbunden ist, um den Motor (48) bei Detektion der Aktivierung des Kraftbegrenzers (64) einzuschalten.

12. Vorrichtung (10) nach zumindest einem der vorstehenden Ansprüche,
**gekennzeichnet durch**
eine, insbesondere an dem Schlitten (34) angeordnete, Leuchte (108), z.B. LED, zur Ausleuchtung eines die Aufnahme für das Setzelement (12) umgebenden Arbeitsbereichs.

13. Verfahren zum manuellen Setzen eines Setzelements (12) in einem Bauteil mittels einer Vorrichtung (10) gemäß Anspruch 1, mit den Schritten:
• Anbringen des Setzelements (12) an der Antriebswelle (46);
• Aufladen des Kraftspeichers (44) durch eine Bewegung des Handgriffs (14) relativ zu dem Schlitten (34) bis zur Aktivierung des Kraftbegrenzers (64),
• Einbringen des Setzelements (12) in das Bauteil unter Rotation der Antriebswelle (46) und Vorschub des Schlittens (34) durch den Kraftspeicher (44).

14. Verfahren nach Anspruch 13,
**dadurch gekennzeichnet, dass**
das Begrenzen der Aufladung des Kraftspeichers (44) durch einen Kraftbegrenzungsanschlag (66, 68) bewirkt wird, der insbesondere zwischen dem Handgriff (14) und einem Abstützteil (58) wirkt; und/oder bei Aktivierung des Kraftbegrenzers (64) ein Schalter (106) betätigt wird, der ein Einschalten eines Motors, insbesondere Elektromotors (48), zum Antreiben der Antriebswelle (46) bewirkt; und/oder
ein Schalter (88) betätigt wird, der ein Ausschalten eines Motors, insbesondere Elektromotors (48), zum Antreiben der Antriebswelle (46) bewirkt, wenn der Schlitten (32) eine Endposition erreicht hat; und/oder nach einer Abkühlphase von kleiner 10 Sekunden, insbesondere 1 bis 3 Sekunden, gemessen ab dem Zeitpunkt an dem das Setzelement (12) nicht mehr rotiert, eine Signaleinrichtung (90) ein Signal aussendet, um zu signalisieren, dass der Setzvorgang beendet ist; und/oder
ein Motor, insbesondere Elektromotor (48), zum Antreiben der Antriebswelle (46) nach seinem Ausschalten aktiv gebremst wird.

## Claims

1. A hand-guided apparatus (10) for setting a setting element (12) in a component, comprising
a handle (14) for holding the apparatus (10);
a carriage (34) which is movable relative to the handle (14) and which carries a rotationally supported drive shaft (46) at whose one end a mount for the setting element (12) is formed;
a support part (58);
a force accumulator (44) which is connected between the handle (14) and the carriage (34) and which serves for storing a defined feed force with which the force accumulator (44) can be loaded by a relative movement between the handle (14) and the carriage (34); and
a force limiter (64) for limiting the feed force stored in the force accumulator (44),
wherein the force accumulator (44) is configured to exert the stored feed force onto the setting element (12) via the carriage (34),
**characterized in that**
the force limiter (64) is formed by two corresponding force limitation abutments (66, 68), with the first force limitation abutment (66) being provided at the support part (58) and with the second force limitation abutment (68) being provided at the handle (14).

2. An apparatus (10) in accordance with claim 1,
**characterized in that**
the first force limitation abutment (66) and/or the second force limitation abutment (68) is/are adjustable in an axial direction.

3. An apparatus (10) in accordance with at least one of the preceding claims,
**characterized by**
a motor, in particular an electric motor (48), for driving the drive shaft (46).

4. An apparatus (10) in accordance with at least one of the preceding claims,
**characterized in that**
a support part (58) comprises a first end abutment (80) and the carriage (34) comprises a second end abutment (82) to limit a feed movement of the carriage (34) relative to the support part (58).

5. An apparatus (10) in accordance with at least one of the preceding claims,
**characterized by**
a detection means (86) for detecting an end position of the carriage (34), in particular for detecting a contact between a first end abutment (80) and a second end abutment (82).

6. An apparatus (10) in accordance with claim 5,
**characterized in that**
the detection means (86) comprises a switch (88) which is connected to a motor, in particular to an electric motor (48), drive-effectively coupled to the drive shaft (46) to switch off the motor (48) on the detection of the end position.

7. An apparatus (10) in accordance with at least one of the preceding claims,
**characterized by**
a signal device (90) for transmitting a signal to a user that indicates the end of a setting process.

8. An apparatus (10) in accordance with at least one of the preceding claims,
**characterized in that**
a return spring (60, 62) is arranged between the support part (58) and the carriage (34) to move the carriage (34) back into a starting position after the end of a setting process.

9. An apparatus (10) in accordance with at least one of the preceding claims,
**characterized by**
at least one linear guide, in particular two guide rods (30, 32), at which the carriage (34) and the handle (14) are linearly movably guided.

10. An apparatus (10) in accordance with at least one of the preceding claims,
**characterized by**
a detection means (104) for detecting an activation of the force limiter (64), in particular for detecting a contact between the first force limitation abutment (66) provided at a support part (58) and the second force limitation abutment (68) provided at the handle (14).

11. An apparatus (10) in accordance with claim 10,
**characterized in that**
the detection means (104) comprises a switch (106) which is connected to a motor, in particular to an electric motor (48), drive-effectively coupled to the drive shaft (46) to switch on the motor (48) on the detection of the activation of the force limiter (64).

12. An apparatus (10) in accordance with at least one of the preceding claims,
**characterized by**
a lamp (108), e.g. an LED, in particular arranged at the carriage (34), for illuminating a work region surrounding the mount for the setting element (12).

13. A method for a manual setting of a setting element (12) in a component by means of an apparatus (10) in accordance with claim 1, said method comprising the steps:
• attaching the setting element (12) to the drive shaft (46);
• loading the force accumulator (44) by a movement of the handle (14) relative to the carriage (34) up to the activation of the force limiter (64); and
• introducing the setting element (12) into the component while rotating the drive shaft (46) and feeding the carriage (34) by the force accumulator (44).

14. A method in accordance with claim 13,
**characterized in that**
the limitation of the loading of the force accumulator (44) is effected by a force limitation abutment (66, 68) which in particular acts between the handle (14) and a support part (58); and/or,
on an activation of the force limiter (64), a switch (106) is actuated which effects a switching on of a motor, in particular of an electric motor (48), for driving the drive shaft (46); and/or
a switch (88) is actuated which effects a switching off of a motor, in particular of an electric motor (48), for driving the drive shaft (46) when the carriage (32) has reached an end position; and/or
a signal device (90) transmits a signal to signalize that the setting process is ended after a cooling down phase of less than 10 seconds, in particular of 1 to 3 seconds, measured from the point in time at which the setting element (12) no longer rotates; and/or
a motor, in particular an electric motor (48), for driving the drive shaft (46) is actively braked after its switching off.

## Revendications

1. Dispositif (10) guidé à la main et destiné à poser un élément à poser (12) dans un composant, comportant
une poignée (14) pour tenir le dispositif (10) ;
un chariot (34) mobile par rapport à la poignée (14) et portant un arbre d'entraînement (46) monté mobile en rotation, à une extrémité duquel est formé un logement pour l'élément à poser (12) ;
une partie de soutien (58) ;
un accumulateur de force (44) qui est branché entre la poignée (14) et le chariot (34) et qui sert à stocker une force d'avance définie avec laquelle l'accumulateur de force (44) peut être chargé par un mouvement relatif entre la poignée (14) et le chariot (34) ; et
un limiteur de force (64) pour limiter la force d'avance accumulée dans l'accumulateur de force (44) ;
l'accumulateur de force (44) étant réalisé pour exercer la force d'avance accumulée sur l'élément à poser (12) par l'intermédiaire du chariot (34) ;
**caractérisé en ce que**
le limiteur de force (64) est formé par deux butées de limitation de force correspondantes (66, 68), la première butée de limitation de force (66) étant prévue sur la partie de soutien (58) et la deuxième butée de limitation de force (68) étant prévue sur la poignée (14).

2. Dispositif (10) selon la revendication 1,
**caractérisé en ce que**
la première butée de limitation de force (66) et/ou la deuxième butée de limitation de force (68) est ou sont réglable(s) dans la direction axiale.

3. Dispositif (10) selon l'une au moins des revendications précédentes,
**caractérisé par**
un moteur, en particulier un moteur électrique (48), pour l'entraînement de l'arbre d'entraînement (46).

4. Dispositif (10) selon l'une au moins des revendications précédentes,
**caractérisé en ce que**
la partie de soutien (58) comprend une première butée de fin de course (80) et le chariot (34) comprend une deuxième butée de fin de course (82) pour limiter un mouvement d'avance du chariot (34) par rapport à la partie de soutien (58).

5. Dispositif (10) selon l'une au moins des revendications précédentes,
**caractérisé par**
un moyen de détection (86) pour détecter une position de fin de course du chariot (34), en particulier pour détecter un contact entre une première butée de fin de course (80) et une deuxième butée de fin de course (82).

6. Dispositif (10) selon la revendication 5,
**caractérisé en ce que**
le moyen de détection (86) comprend un interrupteur (88) qui est relié à un moteur, en particulier à un moteur électrique (48), couplé en entraînement à l'arbre d'entraînement (46) afin de couper le moteur (48) lors de la détection de la position de fin de course.

7. Dispositif (10) selon l'une au moins des revendications précédentes,
**caractérisé par**
un moyen de signalisation (90) pour émettre un signal à un utilisateur, ledit signal indiquant la fin d'une opération de pose.

8. Dispositif (10) selon l'une au moins des revendications précédentes,
**caractérisé en ce que**
un ressort de rappel (60, 62) est disposé entre la partie de soutien (58) et le chariot (34) afin de ramener le chariot (34) jusqu'à une position initiale après l'achèvement d'une opération de pose.

9. Dispositif (10) selon l'une au moins des revendications précédentes,
**caractérisé par**
au moins un guidage linéaire, en particulier deux tiges de guidage (30, 32), sur lequel ou sur lesquelles le chariot (34) et la poignée (14) sont guidés de façon linéairement mobile.

10. Dispositif (10) selon l'une au moins des revendications précédentes,
**caractérisé par**
un moyen de détection (104) pour détecter une activation du limiteur de force (64), en particulier pour détecter un contact entre une première butée de limitation de force (66) prévue sur la partie de soutien (58) et une deuxième butée de limitation de force (68) prévue sur la poignée (14).

11. Dispositif (10) selon la revendication 10,
**caractérisé en ce que**
le moyen de détection (104) comprend un interrupteur (106) qui est relié à un moteur, en particulier à un moteur électrique (48), couplé en entraînement à l'arbre d'entraînement (46) afin de mettre en marche le moteur (48) lors de la détection de l'activation du limiteur de force (64).

12. Dispositif (10) selon l'une au moins des revendications précédentes,
**caractérisé par**
une lampe (108), par exemple une DEL, disposée en particulier sur le chariot (34), pour éclairer une zone de travail entourant le logement pour l'élément à poser (12).

13. Procédé de pose manuelle d'un élément à poser (12) dans un composant au moyen d'un dispositif (10) selon la revendication 1, comprenant les étapes suivantes consistant à :
• monter l'élément à poser (12) sur l'arbre d'entraînement (46) ;
• charger l'accumulateur de force (44) par un mouvement de la poignée (14) par rapport au chariot (34) jusqu'à ce que le limiteur de force (64) soit activé,
• insérer l'élément à poser (12) dans le composant tout en faisant tourner l'arbre d'entraînement (46) et en faisant avancer le chariot (34) par l'intermédiaire de l'accumulateur de force (44).

14. Procédé selon la revendication 13,
**caractérisé en ce que**
la limitation de la charge de l'accumulateur de force (44) est procurée par une butée de limitation de force (66, 68) qui agit en particulier entre la poignée (14) et une partie de soutien (58) ; et/ou
lors de l'activation du limiteur de force (64), un interrupteur (106) est actionné qui empêche une mise en marche d'un moteur, en particulier d'un moteur électrique (48) d'entraînement de l'arbre d'entraînement (46) ; et/ou un interrupteur (88) est actionné qui provoque une coupure d'un moteur, en particulier d'un moteur électrique (48) d'entraînement de l'arbre d'entraînement (46), lorsque le chariot (32) a atteint une position de fin de course ; et/ou
après une phase de refroidissement de moins de 10 secondes, en particulier de 1 à 3 secondes, mesurée à partir du moment où l'élément à poser (12) cesse de tourner, un moyen de signalisation (90) émet un signal indiquant que l'opération de pose est achevée ; et/ou
un moteur, en particulier un moteur électrique (48) d'entraînement de l'arbre d'entraînement (46) est freiné activement après sa coupure.
